# EUROPEAN PATENT APPLICATION

(11) **EP 4 610 752 A1**
(43) Date of publication of application: **03.09.2025**
(21) Application number: 22963391.2
(22) Date of filing: 24.10.2022
(51) Int. Cl.: G05B 19/4065, B23Q 17/00, G05B 19/18, G05B 19/418

(54) **MONITORING DEVICE, MACHINING SYSTEM, MONITORING SYSTEM, AND MONITORING METHOD**

(71) Applicant: FANUC CORPORATION, Oshino-mura Minamitsuru-gun Yamanashi 401-0597 (JP)
(72) Inventor: YAMAOKA Masahide, Minamitsuru-gun, Yamanashi 401-0597 (JP)
(74) Representative: Schmidt, Steffen J.
(86) International application number: PCT/JP2022/039518
(87) International publication number: WO 2024/089739

(57) **Abstract**

This monitoring device for monitoring a plurality of machine tools comprises a display information generation unit that generates display information for displaying a plurality of shapes corresponding to the plurality of machine tools on a display unit, and an information acquisition unit that acquires information on the remaining life of a component provided in each of the plurality of machine tools. The display information generation unit generates the display information the basis of the information on the remaining life acquired by the information acquisition unit such that the shape is displayed on the display unit in a manner corresponding to the remaining life.

## Description

### TECHNICAL FIELD

The present disclosure relates to a monitoring device, a machining system, a monitoring system, and a monitoring method.

### BACKGROUND ART

Machine tools are composed of multiple components. When a part fails, it is necessary to replace the failed component with a new one. In relation to part replacement for machine tools, JP 2021-039493 A discloses that the failure time of the components constituting each unit of a machine tool is predicted and the machine maintenance time by the user is notified.

### SUMMARY OF THE INVENTION

Recently, a monitoring device capable of monitoring machine tools more suitably has been awaited.

A first aspect of the present disclosure is a monitoring device for monitoring a plurality of machine tools, comprising: a display information generation unit configured to generate display information for displaying on a display unit a plurality of figures corresponding to the plurality of machine tools; and an information acquisition unit configured to acquire information concerning a remaining lifespan of a component of each of the plurality of machine tools, wherein the display information generation unit generates the display information based on information concerning the remaining lifespan acquired by the information acquisition unit in a manner so that the figures are displayed on the display unit in a manner that represents the remaining lifespan.

A second aspect of the present disclosure is a machining system comprising: a monitoring device according to the first aspect; and the plurality of machine tools monitored by the monitoring device.

A third aspect of the present disclosure is a monitoring system comprising: a monitoring device including an information acquisition unit configured to acquire information concerning a remaining lifespan of a component of each of a plurality of machine tools; and a monitoring terminal including a display unit and configured to display on the display unit a plurality of figures corresponding to the plurality of machine tools in a manner that represents the remaining lifespan.

A fourth aspect of the present disclosure is a monitoring method for monitoring a plurality of machine tools, comprising: a display information generation step of generating display information for displaying on a display unit a plurality of figures corresponding to the plurality of machine tools; and an information acquisition step of acquiring information concerning a remaining lifespan of a component of each of the plurality of machine tools, wherein in the display information generation step, the display information is generated based on information concerning the remaining lifespan acquired in the information acquisition step in a manner so that the figure is displayed on the display unit in a manner that represents the remaining lifespan.

### BRIEF DESCRIPTION OF DRAWINGS

[FIG. 1] FIG. 1 is a block diagram illustrating a machining system according to an embodiment;
[FIG. 2] FIG. 2 is a data table representing an example of remaining lifespan information;
[FIG. 3] FIG. 3 is a diagram illustrating a display screen displayed on a display unit;
[FIG. 4] FIG. 4 is a diagram illustrating a display screen displayed on a display unit;
[FIG. 5] FIG. 5 is a diagram illustrating a display screen displayed on a display unit;
[FIG. 6] FIG. 6 is a diagram illustrating a display screen displayed on a display unit;
[FIG. 7] FIG. 7 is a diagram illustrating a display screen displayed on a display unit; and
[FIG. 8] FIG. 8 is a flowchart illustrating a monitoring method.

### DETAILED DESCRIPTION OF THE INVENTION

JP 2021-039493 A describes that the names (text information) of components are displayed in a list. However, based solely on the text information when there are multiple machine tools, it is difficult for the user to intuitively judge which machine tool needs component replacement.

### [One Embodiment]

A monitoring device, a machining system, a monitoring system, and a monitoring method according to an embodiment will be described with reference to the drawings. In the following description, the same reference numeral is assigned to the components having the same or similar function. And the overlapping description of those configurations may be omitted.

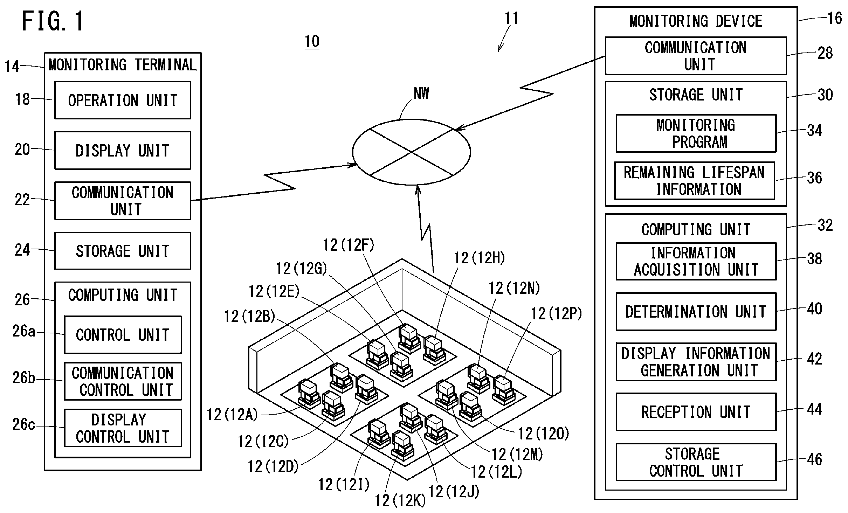

FIG. 1 is a block diagram illustrating a machining system 10 according to the present embodiment.

The machining system 10 is a system for managing a plurality of machine tools 12 in a factory, for example. The machining system 10 is provided with a monitoring system 11 and a plurality of machine tools 12. The monitoring system 11 includes a monitoring terminal 14 and a monitoring device 16.

Although the number of machine tools 12 shown in FIG. 1 is 16 (machine tools 12A to 12P), the number of machine tools 12 provided in the machining system 10 is not limited to 16. A model of the machine tool 12 is not particularly limited. Although not shown in detail, each of the plurality of machine tools 12 includes a processing machine and a controller. The processing machine is a machine that processes a workpiece. The controller is a computer that controls the processing machine. The controller is equipped with a processor, a memory, an operation touch panel, a communication module, or the like. The communication module is connected to a network NW. In other words, each of the plurality of machine tools 12 is connected to the network NW.

The network NW is, for example, a LAN (Local Area Network) built in a factory site. The network NW is built by appropriately combining a wired LAN and a wireless LAN, for example.

The monitoring terminal 14 is a terminal device (computer) used by a user who uses the machining system 10. The monitoring terminal 14 is, for example, a tablet terminal but is not limited to this. Although one monitoring terminal 14 is shown in FIG. 1, multiple monitoring terminals 14 may be provided in the machining system 10. The monitoring terminal 14 includes an operation unit 18, a display unit 20, a communication unit 22, a storage unit 24, and a computing unit 26.

The operation unit 18 accepts input operations performed by a user on the monitoring terminal 14. The display unit 20 is provided with a display element (not shown). The display device is, for example, a liquid crystal display device, an organic electroluminescence display device, or the like. At least part of the operation unit 18 may be realized by a touch panel (not shown) provided with such a display element.

The communication unit 22 is provided with, for example, a communication module (not shown). The communication unit 22 is connected to the network NW.

The storage unit 24 includes a volatile memory (not shown) and a non-volatile memory (not shown). Examples of the volatile memory include RAM (Random Access Memory). Examples of the nonvolatile memory include ROM (Read Only Memory), flash memory, or like.

The computing unit 26 is provided with a processor such as a CPU (Central Processing Unit) or a GPU (Graphics Processing Unit). That is, the computing unit 26 can be configured by processing circuitry. The computing unit 26 includes a control unit 26a, a communication control unit 26b, and a display control unit 26c.

The control unit 26a, the communication control unit 26b, and the display control unit 26c can be realized by the computing unit 26 executing programs stored by the storage unit 24, for example. The control unit 26a controls the entire monitoring terminal 14. The control unit 26a can control the monitoring terminal 14 in accordance with an operation performed by a user using the operation unit 18. The communication control unit 26b controls the communication unit 22. The communication control unit 26b controls the communication unit 22, whereby the monitoring terminal 14 can communicate with the monitoring device 16 via the network NW. The display control unit 26c controls the display unit 20 to display information on the display unit 20.

The monitoring device 16 is a server (computer) that monitors the plurality of machine tools 12. The monitoring device 16 includes a communication unit 28, a storage unit 30, and a computing unit 32.

The communication unit 28 is provided with, for example, a communication module (not shown). The communication unit 28 is connected to the network NW.

The storage unit 30 includes a volatile memory (not shown) and a non-volatile memory (not shown). Examples of the volatile memory include RAM. Examples of the nonvolatile memory include ROM, flash memory, or the like. Data or the like can be stored, for example, in the volatile memory. Programs, tables, maps, or the like can be stored, for example, in the non-volatile memory. At least part of the storage unit 30 may be provided in a processor, an integrated circuit, or the like, which will be described later. The storage unit 30 may further include a hard disk drive (HDD), a solid state drive (SSD), or the like.

The storage unit 30 stores a monitoring program 34. The monitoring program 34 is a program for causing a computer to execute the monitoring method according to the present embodiment.

The storage unit 30 also stores remaining lifespan information 36. The remaining lifespan information 36 is information concerning the remaining lifespan of the components each of the plurality of machine tools 12 has. A single machine tool 12 is provided with a plurality of components. Therefore, the remaining lifespan information 36 can include information concerning the remaining lifespan of each of the plurality of components each of the plurality of machine tools 12 has. The remaining lifespan information 36 can be created by an information acquisition unit 38, which will be described later.

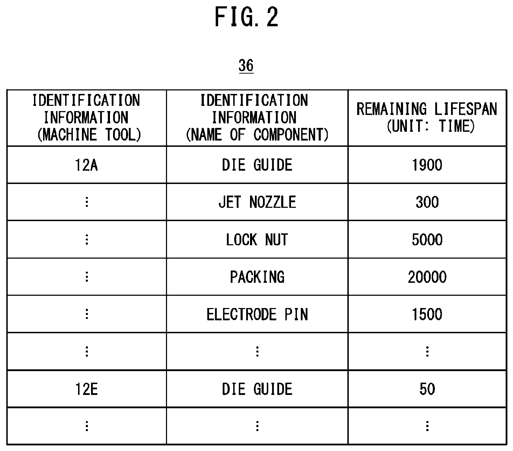

FIG. 2 is a data table representing an example of the remaining lifespan information 36. In the following, the case where each of the machine tools 12A and 12E is a wire electric discharge machine will be described.

The first column in FIG. 2 shows identification information of the plurality of machine tools 12. The identification information of the machine tool 12 is, for example, an identification number composed of alphanumeric characters but is not limited to this. The second column of FIG. 2 shows identification information on a plurality of components of the machine tool 12. The identification information of the component is, for example, a name of a component but is not limited to this. For example, the identification information of the component may be a component model number. The components of the machine tool 12 that is a wire electric discharge machine are, for example, a die guide, a jet nozzle, a lock nut, a packing, an electrode pin, or the like but are not limited to these. The third column of FIG. 2 shows information indicating the remaining lifespan of each of the plurality of components. The remaining lifespan is expressed using time as a unit, such as, but not limited to, hours, years, or the like.

Although not shown, the storage unit 30 can store arrangement information. The arrangement information is information concerning the arrangement of the plurality of machine tools 12. The arrangement information includes, for example, floor information of a building where a plurality of machine tools 12 are installed.

The computing unit 32 is provided with a processor such as a CPU or a GPU. That is, the computing unit 32 can be configured by processing circuits. The computing unit 32 includes an information acquisition unit 38, a determination unit 40, a display information generation unit 42, a reception unit 44, and a storage control unit 46.

The information acquisition unit 38, the determination unit 40, the display information generation unit 42, the reception unit 44, and the storage control unit 46 can be realized by the computing unit 32 executing the monitoring program 34, for example. At least some of the information acquisition unit 38, the determination unit 40, the display information generation unit 42, the reception unit 44, and the storage control unit 46 may be implemented by an integrated circuit such as an ASIC (Application Specific Integrated Circuit) and an FPGA (Field-Programmable Gate Array). At least part of the information acquisition unit 38, the determination unit 40, the display information generation unit 42, the reception unit 44, and the storage control unit 46 may be realized by electronic circuits including discrete devices.

The information acquisition unit 38 acquires information concerning the remaining lifespan of each of the plurality of components each of the plurality of machine tools 12 has. The information acquisition unit 38 can identify the remaining lifespan of a component based on, for example, the difference between a service time determined in advance for the component and an accumulated time during which the component has been used. For illustrative purposes, the case is considered where a die guide has the service time of 2000 hours and the accumulated time the die guide of machine tool 12A has been used is 100 hours. In this case, the information acquisition unit 38 can identify that the remaining lifespan of the die guide of the machine tool 12A is 1900 hours. However, the specific method of acquiring the information concerning the remaining lifespan of the component is not limited to this. For example, the information acquisition unit 38 may identify the remaining lifespan of the component based on a difference between a maximum number of uses determined in advance for the component and an accumulated number of times the component has been used for machining.

The determination unit 40 judges whether each of the plurality of machine tools 12 is in a state requiring component replacement based on the remaining lifespan of the components of each machine tool 12. For example, the determination unit 40 determines whether the remaining lifespan of the component is below a predetermined remaining lifespan threshold. When the remaining lifespan of at least one of the components of machine tool 12 is below the remaining lifespan threshold, it is determined that the machine tool 12 requires component replacement. When the remaining lifespan of all the components of the machine tool 12 is not below the remaining lifespan threshold, the determination unit 40 determines that component replacement is unnecessary for the machine tool 12.

The remaining lifespan threshold is determined in advance based on, for example, an experiment. Information indicating the remaining lifespan threshold is stored in advance by the storage unit 30. The remaining lifespan threshold may be determined according to the type of the component. In this case, the determination unit 40 can use different remaining lifespan thresholds depending on the type of the component.

The remaining lifespan threshold can be set to be greater than zero, for example. More specifically, the remaining lifespan threshold indicates a predetermined value that is less than the above-mentioned service time and greater than zero, for example. The remaining lifespan threshold indicates a predetermined value that is less than the above-described maximum number of uses and greater than zero, for example. Using the remaining lifespan threshold indicating the remaining lifespan greater than zero, the determination unit 40 can determine that the machine tool 12 needs component replacement, before the remaining lifespan of the component becomes zero. That is, the determination unit 40 can determine that the machine tool 12 needs component replacement before the end of the lifespan of the component. For illustrative purposes, the case is considered where the remaining lifespan threshold determined for the die guide indicates a remaining lifespan of 100 hours. In this case, the determination unit 40 determines that the die guide of the machine tool 12A whose remaining lifespan is larger than the remaining lifespan threshold does not need to be replaced, but determines that the die guide of the machine tool 12E whose remaining lifespan is smaller than the remaining lifespan threshold needs to be replaced (see also FIG. 2).

The display information generation unit 42 generates display information. The display information is information for displaying on the display unit 20 of the monitoring terminal 14. The display information generation unit 42 controls the communication unit 28 to send the display information to the monitoring terminal 14 via the network NW. The display control unit 26c controls the display unit 20 based on the display information sent from the display information generation unit 42.

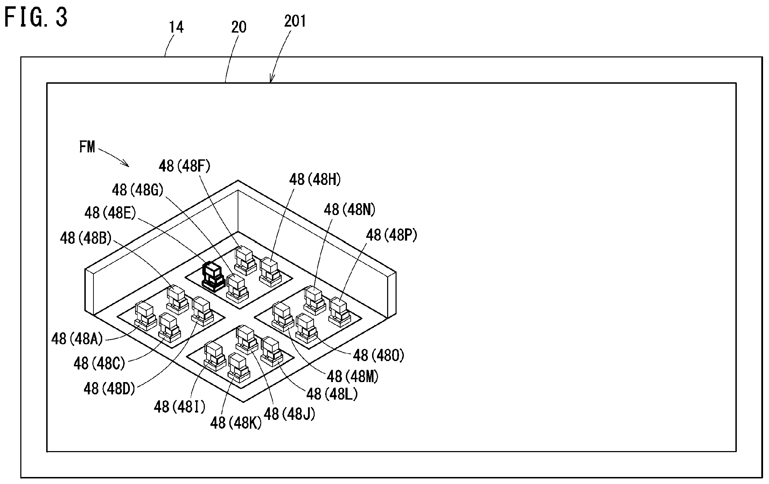

FIG. 3 is a diagram illustrating a display screen 201 displayed on the display unit 20.

The display information generated by the display information generation unit 42 includes information for displaying the display screen 201 on the display unit 20 of the monitoring terminal 14. A plurality of figures 48 (48A-48P) indicating each of the plurality of machine tools 12 are shown in the display screen 201. The figure 48A shown in FIG. 3 shows the machine tool 12A shown in FIG. 1. Similarly, the figures 48B, 48C, ..., and 48P show the machine tools 12B, 12C, ..., and 12P, respectively.

The display information generation unit 42 preferably generates the display information based on the arrangement information indicating the arrangement of the plurality of machine tools 12. Thus, the display control unit 26c can display on the display screen 201 a floor map FM simulating the inside of the building of the factory, and display the figure 48 indicating the machine tool 12 at a position indicating the installation location of the machine tool 12 in the floor map FM. Thus, the user can easily understand the correspondence between the plurality of figures 48 and the plurality of machine tools 12.

The display information generation unit 42 generates display information such that the figure 48 corresponding to the machine tool 12 is displayed on the display unit 20 in a manner that represents the remaining lifespan of the components of the machine tool 12. That is, the display information generation unit 42 generates the display information in such a way that a plurality of figures 48 corresponding to the plurality of machine tools 12 are displayed on the display unit 20 based on the determination result given by the determination unit 40. More specifically, the display information generation unit 42 generates the display information in such a way that a displayed manner of the figure 48 corresponding to the machine tool 12 that does not require component replacement is different from a displayed manner of the figure 48 corresponding to the machine tool 12 that requires component replacement. Thus, the displayed manner of the figure 48 can be changed depending on whether the figure 48corresponds to the machine tool 12 that requires component replacement. By looking at the display screen 201, the user can easily distinguish between the machine tool 12 that does not require component replacement and the machine tool 12 that requires component replacement.

A case will be described as an example where only the machine tool 12E among the plurality of machine tools 12 is determined to require component replacement. In this case, the display information generation unit 42 generates the display information in such a way that the displayed manner of the figure 48E corresponding to the machine tool 12E is different from the displayed manner of the figures 48 (48A to 48D, 48F to 48P) other than the figure 48E. For example, the display information generation unit 42 generates display information in such a way that a color used for thefigure 48E is different from a color used for the other figures 48 (48A to 48D, 48F to 48P). In the example shown in FIG. 3, among the figures 48, only the figure 48E representing the machine tool 12E is shown with thick lines. Thus, the user who sees the display screen 201 can easily grasp that the machine tool 12E requires component replacement.

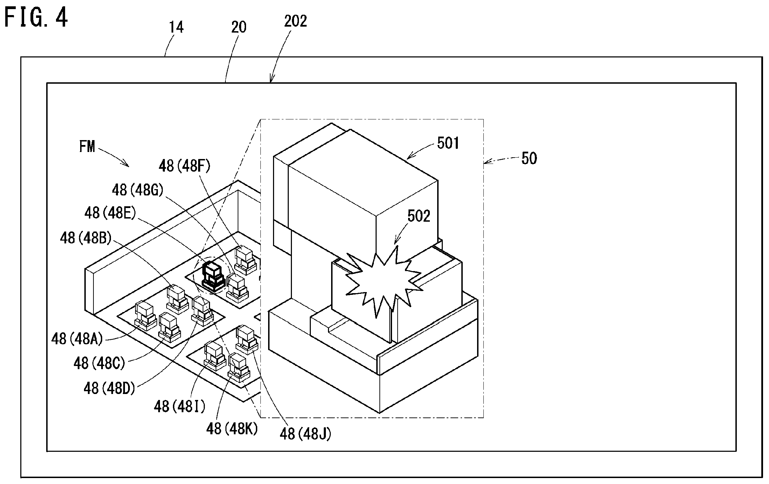

FIG. 4 is a diagram illustrating a display screen 202 displayed on the display unit 20.

The display information generated by the display information generation unit 42 includes information for displaying the display screen 202 on the display unit 20 of the monitoring terminal 14. On the display screen 202, an explanatory diagram 50 is displayed that indicates the position of a component to be replaced (replacement-required component) in the machine tool 12 (12E) in which component replacement is required. The replacement-required component is a component that is in a condition that requires replacement. In other words, the replacement-required component is a component whose remaining lifespan is determined to be below the remaining lifespan threshold by the determination unit 40.

The explanatory diagram 50 includes, for example, a figure 501 indicating the machine tool 12 and a figure 502 indicating the position of the replacement-required component. The explanatory diagram 50 may be displayed together with the floor map FM, the figures 48, and so on. The display screen 202 is displayed on the display unit 20, whereby the user can specifically image the position of the replacement-required component.

For example, the display control unit 26c of the monitoring terminal 14 displays the display screen 202 in response to a predetermined operation performed by the user using the operation unit 18. Specifically, for example, when the user performs a tap operation on the figure 48E displayed on the display screen 201, the display control unit 26c displays the display screen 202 indicating the position of the replacement-required component in the machine tool 12E.

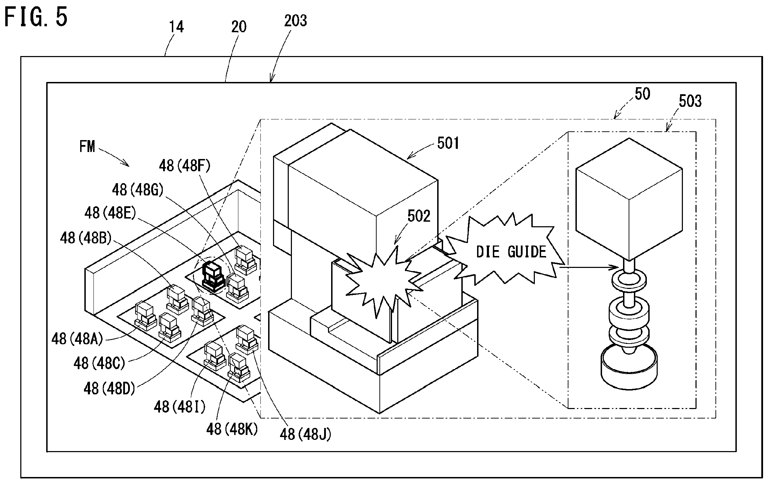

FIG. 5 is a diagram illustrating a display screen 203 displayed on the display unit 20.

The display information generated by the display information generation unit 42 includes information for displaying the display screen 203 on the display unit 20 of the monitoring terminal 14. The display screen 203 displays the position of the replacement-required component in more detail than the display screen 202. For example, an explanatory diagram 503 showing the positional relationship between the replacement-required component and other components provided around the replacement-required component is displayed on the display screen 203. This allows the user to more specifically image a portion of the machine tool 12 at which component replacement should be performed.

For example, the display control unit 26c of the monitoring terminal 14 displays the display screen 203 in response to a predetermined operation performed by the user using the operation unit 18. Specifically, for example, when the user performs a tap operation on the figure 502 displayed on the display screen 202, the display control unit 26c displays the display screen 203.

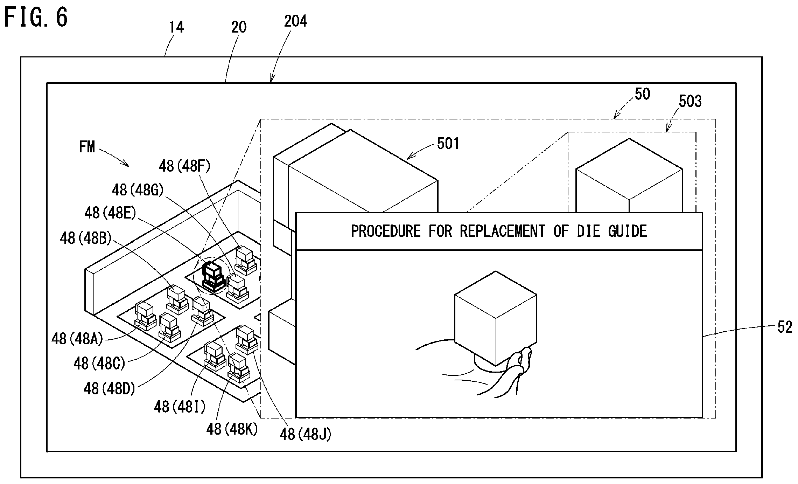

FIG. 6 is a diagram illustrating a display screen 204 displayed on the display unit 20.

The display information generated by the display information generation unit 42 includes information for displaying the display screen 204 on the display unit 20 of the monitoring terminal 14. Information 52 indicating the procedure for performing the replacement operation on the replacement-required component is displayed on the display screen 204. This can reduce the risk of the user mistaking the procedure for the replacement operation on the replacement-required component. The information 52 may include texts describing the procedure for the replacement operation or may include a figure explaining the procedure. The information 52 may be displayed together with the floor map FM, the plurality of figures 48, the explanatory diagram 50, or the like.

As described above, the display information generation unit 42 displays the figure 48 indicating the machine tool 12 on the display unit 20 in a manner that represents the remaining lifespan of the components of the machine tool 12. This allows the user to easily determine on which machine tool 12 component replacement should be performed. The display information generation unit 42 displays a diagram indicating the position of the replacement-required component on the display unit 20. This allows the user to easily determine at which portion of the machine tool 12 component replacement should be performed. Furthermore, the display information generation unit 42 displays on the display unit 20 information indicating a procedure for performing a replacement operation on the replacement-required component. Thus, the user can accurately perform the replacement operation on the replacement-required component.

The reception unit 44 receives replacement completion information input to the monitoring device 16. The replacement completion information is information indicating that the replacement operation on the above-mentioned replacement-required component has been completed. The replacement completion information is transmitted from the monitoring terminal 14 to the monitoring device 16 via the network NW, for example. The monitoring terminal 14 transmits the replacement completion information to the monitoring device 16 in response to the user's instruction performed using the operation unit 18.

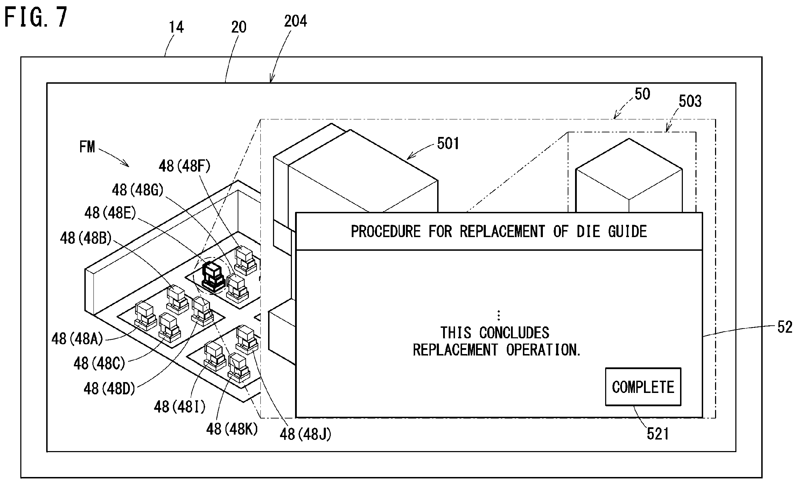

FIG. 7 is a diagram illustrating a display screen 204 displayed on the display unit 20.

For example, the display control unit 26c of the monitoring terminal 14 displays a completion button 521 on the display unit 20. In this case, the computing unit 26 of the monitoring terminal 14 transmits the replacement completion information to the monitoring device 16 in response to a tap operation on the completion button 521.

When the replacement completion information is accepted by the reception unit 44, the information acquisition unit 38 updates the remaining lifespan information 36 based on an item of a replaced component. A case where the old die guide of the machine tool 12E is replaced with a new die guide will be described as an example. In this case, the information acquisition unit 38 resets a numerical value, among numerical values in the data table shown in FIG. 2, that indicates the remaining lifespan of the die guide of the machine tool 12E. Thus, the numerical value, among numerical values in the data table shown in FIG. 2, that indicates the remaining lifespan of the die guide of the machine tool 12E can be set to a value larger than the remaining lifespan threshold.

The display information generation unit 42 of the monitoring device 16 can generate the display information based on the remaining lifespan information 36 that has been reset. Therefore, when the replacement completion information is accepted by the reception unit 44, the display control unit 26c can display the figure 48 indicating the machine tool 12 on the display unit 20 in a manner that represents the remaining lifespan provided to the component of the machine tool 12 in lieu of the replacement-required component. Thus, the user can confirm that the replacement of the component is completed by looking at the display unit 20.

It is preferable that the completion button 521 is displayed on the display unit 20 only when the user performs a predetermined operation using the operation unit 18. For example, as described above, the display control unit 26c of the monitoring terminal 14 displays on the display screen 204 information indicating the procedure for performing the replacement operation on the replacement-required component. It is preferable that the display control unit 26c displays the completion button 521 after the user confirms the information. More specifically, for example, when information indicating the procedure for the replacement operation on the replacement-required component is displayed using texts, it is preferable that the display control unit 26c displays the completion button 521 after the end of the texts is displayed. This can reduce the risk that the completion button 521 will be operated in a state where the user has not yet confirmed the procedure for the replacement operation.

The storage control unit 46 stores reception time information in the storage unit 30. The reception time information is information that indicates the time when the replacement completion information is received by the reception unit 44. Thus, for example, the above-described information acquisition unit 38 can acquire the remaining lifespan information 36 based on the time elapsed from the time indicated by the reception time information.

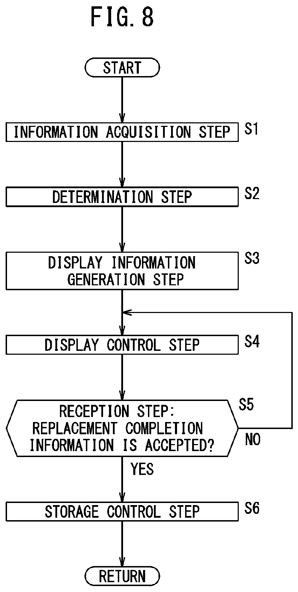

FIG. 8 is a flowchart illustrating the monitoring method.

The monitoring device 16 can execute a monitoring method described below based on the monitoring program 34.

In an information acquisition step S1, the information acquisition unit 38 acquires information concerning the remaining lifespan of the components of each of the plurality of machine tools 12.

Then, the process proceeds to a determination step S2 where the determination unit 40 determines whether the remaining lifespan of the component is below a predetermined remaining lifespan threshold.

Then, the process proceeds to a display information generation step S3 where the display information generation unit 42 generates display information for displaying a plurality of figures 48 corresponding to the plurality of machine tools 12 on the display unit 20. The display information generation unit 42 generates the display information based on the determination result of the determination unit 40 in such a way that the figure 48 indicating the machine tool 12 can be displayed on the display unit 20 in a manner that represents the remaining lifespans of the components of the machine tool 12.

Then, the process proceeds to a display control step S4 where the display control unit 26c displays on the display unit 20 the plurality of figures 48 corresponding to the plurality of machine tools 12. The display control unit 26c displays the plurality of figures 48 on the display unit 20 based on the display information received from the display information generation unit 42 via the network NW. Thus, the plurality of figures 48 indicating the machine tools 12 are displayed on the display unit 20 in a manner that represents the remaining lifespans of the components of the machine tool 12. The display control unit 26c displays the display screens 202 to 204 on the display unit 20 as appropriate.

Then, the process proceeds to a reception step S5 where the reception unit 44 accepts the replacement completion information input to the monitoring device 16. When the replacement completion information is accepted by the reception unit 44 (S5: YES), a storage control step S6 is started. When the replacement completion information is not transmitted from the monitoring terminal 14 and the replacement completion information is not accepted by the reception unit 44 (S5: NO), the display control step S4 and the reception step S5 are continued.

In the storage control step S6, the storage control unit 46 stores the reception time information in the storage unit 30. The reception time information indicates the time when the replacement completion information is received by the reception unit 44. Thus, the monitoring method of FIG. 8 is completed.

### [Modified Examples]

In the following, modified examples of the above embodiment will be described. However, the description overlapping with the above embodiment will be omitted in the following description as appropriate. Elements already described in the above embodiment are given the same reference numerals as in the above embodiment unless otherwise noted.

### (Modified example 1)

In the above embodiment, the case where the display screens 201 to 204 are displayed on the monitoring terminal 14 has been described as an example, but the present invention is not limited to this.

For example, as described above, the controller of the machine tool 12 is provided with the operation touch panel or the like. The display screens 201 to 204 may be displayed on the operation touch panel or the like of the controller.

In addition, the display screens 201 to 204 may be displayed on the display unit (display) of the monitoring device 16.

### (Modified example 2)

In the above embodiment, the figure 48 is displayed on the display unit 20 using the color corresponding to the remaining lifespan, but the present invention is not limited to this.

The display information generation unit 42 may generate the display information in such a way that thefigure 48 is displayed on the display unit 20 with a size corresponding to the remaining lifespan. For example, the display information generation unit 42 generates the display information in such a way that the figure 48 indicating the machine tool 12 is displayed in a larger size on the display unit 20 as the remaining lifespan of the component of the machine tool 12 becomes shorter. Thus, the figure 48 indicating the machine tool 12 provided with the component having a short remaining lifespan can be made more conspicuous than the other figures 48. The display information generation unit 42 may generate the display information in such a way that the figure 48 indicating the machine tool 12 is displayed in a smaller size on the display unit 20 as the remaining lifespan of the component of the machine tool 12 becomes shorter. As a result, the user can be given an image in which the figure 48 showing the machine tool 12 equipped with a component having a short remaining lifespan is different from the other figures48.

The display information generation unit 42 may generate display information in such a way that thefigure 48 blinks according to the remaining lifespan. For example, the display information generation unit 42 generates the display information in such a way that, among the plurality of figures 48, only the figure 48 blinks that indicates the machine tool 12 equipped with a component whose remaining lifespan is less than the remaining lifespan threshold. Thus, thefigure 48 indicating the machine tool 12 provided with the component whose remaining lifespan is below the remaining lifespan threshold can be made more conspicuous than the other figures 48. The display information generation unit 42 may generate the display information in such a way that the figure 48 indicating the machine tool 12 blinks more intensely as the remaining lifespan of the component of the machine tool 12 becomes shorter. Thus, the figure 48 indicating the machine tool 12 provided with the component having a short remaining lifespan can be made more conspicuous than the otherfigures 48.

The display information generation unit 42 may generate the display information in such a way that thefigure 48sways according to the remaining lifespan. For example, the display information generation unit 42 generates the display information in such a way that, among the plurality offigures 48, only the figure 48 sways that indicates the machine tool 12 equipped with a component whose remaining lifespan is less than the remaining lifespan threshold. Thus, the figure 48 indicating the machine tool 12 provided with the component whose remaining lifespan is below the remaining lifespan threshold can be made more conspicuous than the other figures 48. The display information generation unit 42 may generate the display information in such a way that the figure 48 indicating the machine tool 12 sways more intensely as the remaining lifespan of the component of the machine tool 12 becomes shorter. Thus, thefigure 48 indicating the machine tool 12 provided with the component having a short remaining lifespan can be made more conspicuous than the other figures 48.

The display information generation unit 42 may generate the display information in such a way that the display of the figure 48 deforms so that thefigure 48 collapses according to the remaining lifespan. As a result, the user can be given the impression that the machine tool 12 equipped with a component having a short remaining lifespan is about to fail. In other words, the user can be given the impression that the machine tool 12 equipped with a component having a short remaining lifespan requires component replacement. The display information generation unit 42 may generate the display information in such a way that the shorter the remaining lifespan of the component of the machine tool 12 is, the more the figure 48 indicating the machine tool 12 deforms so as to be significantly altered from the original form. Thus, the user can clearly image which machine tool 12 is most likely to fail by looking at the display unit 20.

### (Modified example 3)

The determination unit 40 may use a plurality of remaining lifespan thresholds to determine the state of one component.

For example, the determination unit 40 determines whether the remaining lifespan of the component is less than a first remaining lifespan threshold. When the remaining lifespans of all the components of the machine tool 12 are not less than the first remaining lifespan threshold, the determination unit 40 determines that the component replacement for the machine tool 12 is unnecessary. When the remaining lifespan of at least one of the plurality of components the machine tool 12 has is below a first remaining lifespan threshold, the determination unit 40 determines that component replacement for the machine tool 12 is necessary.

When it is determined that the remaining lifespan of at least one of the plurality of components the machine tool 12 has is below the first remaining lifespan threshold, the determination unit 40 may further determine whether the remaining lifespan of the component is below the second remaining lifespan threshold. The second remaining lifespan threshold is a remaining lifespan threshold showing a value lower than the first remaining lifespan threshold.

The display information generation unit 42 displays the figure 48 indicating the machine tool 12 on the display unit 20 in a manner based on the determination result by the determination unit 40. That is, the display information generation unit 42 changes the displayed manner of the figure 48 between (1) the case where the remaining lifespan is not below the first remaining lifespan threshold, (2) the case where the remaining lifespan is between the first remaining lifespan threshold and the second remaining lifespan threshold, and (3) the case where the remaining lifespan is below the second remaining lifespan threshold.

The machine tool 12 corresponding to the above (1) is the machine tool 12 that does not require component replacement. The machine tool 12 that corresponds to the above (2) or (3) is the machine tool 12 that requires component replacement. The machine tool 12 corresponding to the above (3) is the machine tool 12 that should be especially prioritized for component replacement among the machine tools 12 that require component replacement.

The state of the figure 48is changed according to the above (1) to (3), whereby the user can appropriately determine the priority of the work.

### (Modified example 4)

The remaining lifespan threshold may be a value indicating that the remaining lifespan of the component is zero. In this case, the determination unit 40 determines whether the remaining lifespan of the component is zero. That is, the determination unit 40 can determine whether the lifespan of the component is over.

### (Modified example 5)

As described above, the machine tool 12, the monitoring terminal 14, and the monitoring device 16 can communicate with each other via the network NW. In other words, the machine tool 12, the monitoring terminal 14, and the monitoring device 16 can share information via the network NW. In light of this, at least some of the functions of the monitoring device 16 may be realized by the machine tool 12 or the monitoring terminal 14.

For example, at least some of the information acquisition unit 38, the determination unit 40, the display information generation unit 42, the reception unit 44, and the storage control unit 46 may be realized by the monitoring terminal 14 (the computing unit 26). For example, the monitoring terminal 14 may be provided with the information acquisition unit 38. In this case, the information acquisition unit 38 of the monitoring terminal 14 generates the display information. The information acquisition unit 38 of the monitoring terminal 14 can generate the display information based on the determination result supplied from the monitoring device 16 (determination unit 40) via the network NW.

At least some of the information acquisition unit 38, the determination unit 40, the display information generation unit 42, the reception unit 44, and the storage control unit 46 may be realized by the machine tool 12 (controller). For example, the controller of the machine tool 12 may have the information acquisition unit 38. In this case, the information acquisition unit 38 of the controller generates the display information. The information acquisition unit 38 of the controller of the machine tool 12 can generate the display information based on the determination result supplied from the monitoring device 16 (determination unit 40) via the network NW.

### (Combination of Multiple Modified Examples)

The above-described multiple modified examples may be combined as appropriate as long as contradictions do not occur.

For example, the third and fourth modified example may be combined. In that case, the first remaining lifespan threshold may indicate a remaining lifespan greater than zero whereas the second remaining lifespan threshold may indicate that the remaining lifespan of the component is zero. Also, the first remaining lifespan threshold may indicate that the remaining lifespan of the component is zero whereas the second remaining lifespan threshold may indicate a remaining lifespan smaller than zero. Furthermore, the first remaining lifespan threshold may indicate a remaining lifespan smaller than zero whereas the second remaining lifespan threshold may indicate a remaining lifespan even smaller than the first remaining lifespan threshold. The remaining lifespan less than zero can be represented by a cumulative time for which the component has been used since the remaining lifespan of the component became zero. The remaining lifespan less than zero may be represented by a cumulative number of times the component has been used since the remaining lifespan of the component became zero.

### [Supplementary note]

With respect to the above embodiments and modified examples, the following supplementary notes are further disclosed.

### <Supplementary note 1>

A monitoring device (16) for monitoring a plurality of machine tools (12) comprises a display information generation unit (42) configured to generate display information for displaying on a display unit (20) a plurality of figures (48) corresponding to the plurality of machine tools, and an information acquisition unit (38) configured to acquire information concerning a remaining lifespan of a component of each of the plurality of machine tools, wherein the display information generation unit generates the display information based on the information concerning the remaining lifespan acquired by the information acquisition unit in a manner so that the figures are displayed on the display unit in a manner that represents the remaining lifespan.

### <Supplementary note 2>

In the monitoring device according to Supplementary note 1, the display information generation unit may generate the display information in a manner so that the figures are displayed on the display unit in a first manner in a case where the remaining lifespan is not below a first remaining lifespan threshold that is predetermined whereas the figures are displayed on the display unit in a second manner that is different from the first manner in a case where the remaining lifespan is below the first remaining lifespan threshold.

### <Supplementary note 3>

In the monitoring device according to Supplementary note 2, the display information generation unit may generate the display information in a manner so that the figures are displayed on the display unit in a third manner that is different from either the first manner or the second manner in a case where the remaining lifespan is below a second remaining lifespan threshold that is predetermined lower than the first remaining lifespan threshold.

### <Supplementary note 4>

In the monitoring device according to any one of Supplementary notes 1 to 3, the display information generation unit may generate the display information in a manner so that the figures are displayed on the display unit with a color corresponding to the remaining lifespan.

### <Supplementary note 5>

In the monitoring device according to any one of Supplementary notes 1 to 4, the display information generation unit may generate the display information in a manner so that the figures are displayed on the display unit with a size corresponding to the remaining lifespan.

### <Supplementary note 6>

In the monitoring device according to any one of Supplementary notes 1 to 5, the display information generation unit may generate the display information in a manner so that the figures blink according to the remaining lifespan.

### <Supplementary note 7>

In the monitoring device according to any one of Supplementary notes 1 to 6, the display information generation unit may generate the display information in a manner so that the figures are displayed in a manner that the figures sway according to the remaining lifespan.

### <Supplementary note 8>

In the monitoring device according to any one of Supplementary notes 1 to 7, the display information generation unit may generate the display information in a manner so that the display of the figures is deformed so that the figures collapse according to the remaining lifespan.

### <Supplementary note 9>

In the monitoring device according to any one of Supplementary notes 1 to 8, in a case where the machine tools are provided with a replacement-required component, which is a component in a state of requiring replacement, the display information generation unit may generate the display information so as to display on the display unit an explanatory diagram indicating a position of the replacement-required component in the machine tools.

### <Supplementary note 10>

In the monitoring device according to Supplementary note 9, the display information generation unit may generate the display information so as to display on the display unit information indicating a procedure for performing a replacement operation on the replacement-required component.

### <Supplementary note 11>

The monitoring device according to Supplementary note 10 may further comprise a reception unit (44) that receives replacement completion information indicating that the replacement operation is completed in response to a user instruction, wherein when the replacement completion information is received, the display information generation unit may generate the display information in a manner so that the figures are displayed on the display unit in a manner that represents the remaining lifespan of a component that replaces the replacement-required component in the machine tools.

### <Supplementary note 12>

The monitoring device according to Supplementary note 11 may further comprise a storage control unit (46) configured to cause a storage unit (30) to store reception time information indicating a time when the replacement completion information is received by the reception unit (44).

### <Supplementary note 13>

A machining system (10) comprises the monitoring device according to any one of Supplementary notes 1 to 12 and the plurality of the machine tools monitored by the monitoring device.

### <Supplementary note 14>

A monitoring system (11) comprises a monitoring device (16) including an information acquisition unit (38) configured to acquire information concerning a remaining lifespan of a component of each of a plurality of machine tools (12), and a monitoring terminal (14) including a display unit (20) and configured to display on the display unit a plurality of figures (48) corresponding to the plurality of machine tools in a manner that represents the remaining lifespan.

### <Supplementary note 15>

A monitoring method for monitoring a plurality of machine tools (12) comprises a display information generation step (S3) of generating display information for displaying on a display unit a plurality of figures (48) corresponding to the plurality of machine tools on a display unit (20), and an information acquisition step (S1) of acquiring information concerning a remaining lifespan of a component of each of the plurality of machine tools, wherein in the display information generation step, the display information is generated based on the information concerning the remaining lifespan acquired in the information acquisition step in a manner so that the figures are displayed on the display unit in a manner that represents the remaining lifespan.

Although embodiments of the present disclosure have been described in detail, the present disclosure is not limited to the individual embodiments described above. These embodiments may be variously added, replaced, altered, partially deleted, etc. without departing from the scope of the present disclosure or the intent of the present disclosure as derived from the appended claims and their equivalents. These embodiments can also be implemented in combination. For example, in the above-described embodiments, the order of the operations and the order of the processes are shown as an example, and are not limited to these. The same applies to the case where numerical values or mathematical expressions are used in the description of the above-described embodiments.

### REFERENCE SIGNS LIST

10: Machining system
11: Monitoring System
12: Machine tool
14: Monitoring terminal
16: Monitoring device
20: Display unit
30: Storage unit
38: Information acquisition unit
42: Display information generation unit
44: reception unit
46: Storage control unit
48: Figure
50: Explanatory diagram
52: Information

## Claims

1. A monitoring device for monitoring a plurality of machine tools, the monitoring device comprising:
a display information generation unit configured to generate display information for displaying on a display unit a plurality of figures corresponding to the plurality of machine tools; and
an information acquisition unit configured to acquires information concerning a remaining lifespan of a component of each of the plurality of machine tools,
wherein
the display information generation unit generates the display information based on the information concerning the remaining lifespan acquired by the information acquisition unit in a manner so that the figures are displayed on the display unit in a manner that represents the remaining lifespan.

2. The monitoring device according to claim 1, wherein
the display information generation unit generates the display information in a manner so that the figures are displayed on the display unit in a first manner in a case where the remaining lifespan is not below a first remaining lifespan threshold that is predetermined whereas the figures are displayed on the display unit in a second manner that is different from the first manner in a case where the remaining lifespan is below the first remaining lifespan threshold.

3. The monitoring device according to claim 2, wherein
the display information generation unit generates the display information in a manner so that the figures are displayed on the display unit in a third manner that is different from any of the first manner or the second manner in a case where the remaining lifespan is below a second remaining lifespan threshold that is predetermined and is lower than the first remaining lifespan threshold.

4. The monitoring device according to any one of claims 1 to 3, wherein
the display information generation unit generates the display information in a manner so that the figures are displayed on the display unit with a color corresponding to the remaining lifespan.

5. The monitoring device according to any one of claims 1 to 4, wherein
the display information generation unit generates the display information in a manner so that the figures are displayed on the display unit with a size corresponding to the remaining lifespan.

6. The monitoring device according to any one of claims 1 to 5, wherein
the display information generation unit generates the display information in a manner so that the figures blink according to the remaining lifespan.

7. The monitoring device according to any one of claims 1 to 6, wherein
the display information generation unit generates the display information in a manner so that the figures sway according to the remaining lifespan.

8. The monitoring device according to any one of claims 1 to 7, wherein
the display information generation unit generates the display information in a manner so that the display of the figures is deformed in a manner so that the figures collapse according to the remaining lifespan.

9. The monitoring device according to any one of claims 1 to 8, wherein
in a case where the machine tools are provided with a replacement-required component, which is a component in a state of requiring replacement, the display information generation unit generates the display information so as to display on the display unit an explanatory diagram indicating a position of the replacement-required component in the machine tools.

10. The monitoring device according to claim 9, wherein
the display information generation unit generates the display information so as to display on the display unit information indicating a procedure for performing a replacement operation on the replacement-required component.

11. The monitoring device according to claim 10, further comprising
a reception unit configured to receive, in response to a user instruction, replacement completion information indicating that the replacement operation is completed,
wherein in a case where the replacement completion information is received, the display information generation unit generates the display information in a manner so that the figures are displayed on the display unit in a manner that represents a remaining lifespan of a component that has replaced the replacement-required component of the machine tools.

12. The monitoring device according to claim 11, further comprising
a storage control unit configured to cause a storage unit to store reception time information indicating a time when the replacement completion information is received by the reception unit.

13. A machining system comprising:
the monitoring device according to any one of claims 1 to 12; and
the plurality of machine tools monitored by the monitoring device.

14. A monitoring system comprising:
a monitoring device including an information acquisition unit configured to acquire information concerning a remaining lifespan of a component of each of a plurality of machine tools; and
a monitoring terminal including a display unit and configured to display on the display unit a plurality of figures corresponding to the plurality of machine tools in a manner that represents the remaining lifespan.

15. A monitoring method for monitoring a plurality of machine tools, the monitoring method comprising:
a display information generation step of generating display information for displaying on a display unit a plurality of figures corresponding to the plurality of machine tools; and
an information acquisition step of acquiring information concerning a remaining lifespan of a component of each of the plurality of machine tools,
wherein
in the display information generation step, the display information is generated based on the information concerning the remaining lifespan acquired in the information acquisition step in a manner so that the figures are displayed on the display unit in a manner that represents the remaining lifespan.
